# EUROPEAN PATENT APPLICATION

(11) **EP 4 600 286 A1**
(43) Date of publication of application: **13.08.2025**
(21) Application number: 23874730.7
(22) Date of filing: 27.09.2023
(51) Int. Cl.: C08G 59/32, B41J 2/14, C08K 3/34, C08K 5/17, C08K 5/3445, C08K 5/544, C08L 63/00, C09J 163/00

(54) **EPOXY RESIN COMPOSITION**

(30) Priority: 07.10.2022 JP 2022162339
(71) Applicant: ThreeBond Co., Ltd., Tokyo 192-0398 (JP)
(72) Inventor: IMAI, Yusuke, Hachioji-shi, Tokyo 192-0398 (JP); MIHASHI, Kouki, Hachioji-shi, Tokyo 192-0398 (JP)
(74) Representative: Hasegawa, Kan
(86) International application number: PCT/JP2023/035095
(87) International publication number: WO 2024/075602

(57) **Abstract**

The epoxy resin composition of the present invention provides a epoxy resin composition that can be cured at a low temperature and can achieve both excellent adhesive strength and excellent ink resistance. An epoxy resin composition, which comprises the following components (A) to (C), and comprising 40% by mass or more of a glycidyl amine-type epoxy resin (A-1) relative to 100% by mass of the component (A): (A) an epoxy resin, (B) talc, and (C) a curing agent that is a liquid at 25°C, is provided.

## Description

### Technical Field

The present invention relates to an epoxy resin composition. More preferably, the present invention relates to an epoxy resin composition suitable for bonding a part or a member used in an inkjet head in an inkjet printer.

### Background Art

The inkjet printing is a technology that is capable of directly printing letters and images on a printing medium by ejecting an ink in the state of fine droplets, and is a technology widely used for inkjet printers and the like. Solvent-based inks used in inkjet printing are normally obtained by dispersing plastic pigments in a solvent. This solvent is required to dissolve plastic as a fixing agent for the plastic pigment. For this reason, for bonding parts or members of inkjet heads of inkjet printers, epoxy resin adhesives having high chemical resistance have conventionally been used (Patent Literature 1). Besides, there has been a demand for epoxy resin compositions having high solvent resistance and chemical resistance also in technologies other than inkjet printers.

### Citation List

### Patent Literature

Patent Literature 1: Japanese Patent Application Publication No. 2002-155129

### Summary of Invention

Since solvents used for inks of inkjet printing have high erosion into adhesives, epoxy resin adhesives used for inkjet heads need to have resistance to inks used in inkjet printing. In view of this, to improve resistance of an epoxy resin adhesive to an ink, enhancing the cross-linking density of an epoxy resin, highly filling an epoxy resin with a filler, and the like are conducted in general. On the other hand, however, there is a problem that the adhesive force is lowered and the properties as an adhesive are lowered. Moreover, since inkjet head are composed of parts or members which cannot be heated at a high temperature, low-temperature curability is required for adhesives. Besides, also in technologies other than inkjet printers, there has been a demand for an epoxy resin composition and an adhesive having high solvent resistance, chemical resistance, and water resistance while ensuring low-temperature curability.

As a result of earnestly conducting studies to solve the above-described problems, the present inventors have found an approach to obtain an epoxy resin composition that can be cured at a low temperature and can achieve both excellent adhesive strength and ink resistance. Here, the ink resistance means to encompass solvent resistance meaning to have resistance to solvents such as organic solvents and water contained in inks, and chemical resistance meaning to have resistance to other chemicals such as alcohols, and specifically means to encompass solvent resistance, chemical resistance, organic solvent resistance, and water resistance.

The present invention may be the following aspects.
[1] An epoxy resin composition comprising the following components (A) to (C), and comprising 40% by mass or more of a glycidyl amine-type epoxy resin (A-1) relative to 100% by mass of the component (A):
   (A) an epoxy resin,
   (B) talc, and
   (C)a curing agent that is a liquid at 25°C.
[2] The epoxy resin composition according to the [1], wherein the component (C) is an imidazole curing agent and/or an amine curing agent.
[3] The epoxy resin composition according to the [1] or [2], wherein a content of the component (B) is 20 to 200 parts by mass relative to 100 parts by mass of the component (A).
[4] The epoxy resin composition according to any one of the [1] to [3], further comprising a dispersant as a component (D).
[5] The epoxy resin composition according to any one of the [1] to [4], further comprising a silane coupling agent as a component (E).
[6] The epoxy resin composition according to the [5], wherein the component (E) is an amino group-containing silane coupling agent.
[7] The epoxy resin composition according to any one of the [1] to [6], wherein a content of the component (C) is 1 to 50 parts by mass relative to 100 parts by mass of the (A).
[8] An adhesive comprising the epoxy resin composition according to any one of the [1] to [7].
[9] The adhesive according to the [8], that is for bonding a part and/or a member of an inkjet head.
[10] A kit comprising an agent A containing the following component (A) and component (B), and an agent B containing the following component (C),
   (A) an epoxy resin, provided that the component (A) contains 40% by mass or more of a glycidyl amine-type epoxy resin (A-1) relative to 100% by mass of the component (A),
   (B) talc, and
   (C) a curing agent that is a liquid at 25°C.
[11] The kit according to the [10], wherein the agent A further contains a dispersant as a component (D).
[12] The kit according to the [10] or [11], wherein the agent B further contains a silane coupling agent as a component (E).
[13] A two-part mixing-type adhesive comprising the kit according to any one of the [10] to [12].
[14] The adhesive according to the [13], that is for bonding a part and/or a member of an inkjet head.
[15] A cured product obtained by curing the epoxy resin composition according to any one of the [1] to [7] or the kit according to any one of the [10] to [12].
[16] An inkjet head comprising a bonded portion bonded by the adhesive according to any one of the [8], [9], [13], and [14].

Moreover, the gist of the present invention may also be as described below.
[1] An epoxy resin composition for an inkjet head, comprising the following (A) to (C), and comprising 40% by mass or more of a glycidyl amine-type epoxy resin (A-1) in the component (A):
   (A) an epoxy resin,
   (B) talc, and
   (C) a curing agent that is a liquid at 25°C.
[2] The epoxy resin composition for an inkjet head according to [1], wherein the (C) is an imidazole curing agent and/or an amine curing agent.
[3] The epoxy resin composition for an inkjet head according to [1] or [2], wherein a content of the (B) is 20 to 200 parts by mass relative to 100 parts by mass of the (A).
[4] The epoxy resin composition for an inkjet head according to [1] or [2], further comprising a dispersant as (D).
[5] The epoxy resin composition for an inkjet head according to [1] or [2], further comprising a silane coupling agent as (E).
[6] The epoxy resin composition for an inkjet head according to [1] or [2], wherein a content of the (C) is 1 to 50 parts by mass relative to 100 parts by mass of the (A).
[7] The epoxy resin composition for an inkjet head according to [1] or [2], that is of a two-part mixing type comprising a composition containing the (A) and (B) as an agent A, and a composition containing the (C) as an agent B.
[8] The epoxy resin composition for an inkjet head according to [5], wherein the (E) is an amino group-containing silane coupling agent.
[9] A cured product obtained from the epoxy resin composition for an inkjet head according to [1] or [2].
[10] An inkjet head bonded by the epoxy resin composition for an inkjet head according to [1] or [2].

### Advantageous Effects of Invention

The epoxy resin composition of the present invention is a resin composition that can be cured at a low temperature and can achieve both excellent adhesive strength and excellent ink resistance. In the case of using the epoxy resin composition of the present invention for an inkjet head, the epoxy resin composition of the present invention is excellent in adhesive strength while having an excellent resistance to an ink used in an inkjet printer, and is thus very useful as an adhesive suitable for bonding a part or a member used in an inkjet head.

### Description of Embodiments

Next, the detail of the present invention will be described. Note that in the present Specification, "X to Y" is used to mean to include numerical values (X and Y) described on the front and rear sides as the lower limit value and the upper limit value, and means "X or more and Y or less". Preferable aspects, more preferable aspects, and the like given below can be used in combination with each other as appropriate irrespective of the expressions of "preferable", "more preferable", and the like. In addition, the description of numerical ranges is illustrative, and ranges obtained by combining the upper limit and the lower limit of each range as well as numerical values of Examples as appropriate can be favorably used irrespective of the expressions of "preferable", "more preferable", and the like. Moreover, terms "contain" or "include" or the like can be read as "consist essentially of" or "consist of" as appropriate.

### <Epoxy resin composition>

An aspect of the present invention is an epoxy resin composition comprising the following components (A) to (C), optionally further comprising components (D) to (F), and comprising 40% by mass or more of a glycidyl amine-type epoxy resin (A-1) relative to 100% by mass of the component (A). The epoxy resin composition will be described in detail below.

The component (A) used in the present invention is an epoxy resin. Specific examples of (A) are not particularly limited, but include, for example, bisphenol-type epoxy resins such as bisphenol A-type epoxy resins, bisphenol F-type epoxy resins, bisphenol S-type epoxy resins, bisphenol AD-type epoxy resins, brominated bisphenol A-type epoxy resins, and hydrogenated bisphenol A-type epoxy resins; naphthalene epoxy resins; biphenyl epoxy resins; novolac epoxy resins such as phenol novolac-type epoxy resins and ortho-cresol novolac-type epoxy resins; glycidyl amine-type epoxy resins; dicyclopentadiene-type epoxy resins; alicyclic epoxy resins, and the like. One of these may be used alone, or two or more of these may be used in mixture; however, it is preferable that 40% by mass or more of a glycidyl amine-type epoxy resin be contained in the component (A) in the present invention from the viewpoint of ink resistance. The component (A) preferably contains 50% by mass or more of a glycidyl amine-type epoxy resin, and more preferably contains only a glycidyl amine-type epoxy resin, from the viewpoint of improving the ink resistance. The glycidyl amine-type epoxy resin mentioned in the present invention is an epoxy resin having one or more glycidyl groups that are directly coupled to nitrogen atoms, and has the following structure.

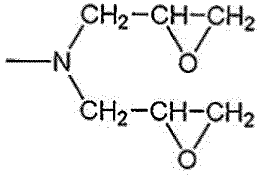

The component (A) preferably contains a trifunctional glycidyl amine-type epoxy resin from the viewpoint of improving low-temperature curability and adhesive strength. The component (A) preferably contains a glycidyl amine-type epoxy resin and a bisphenol-type epoxy resin, more preferably contains a glycidyl amine-type epoxy resin and a bisphenol A-type diglycidyl ether and/or a bisphenol F-type diglycidyl ether, and most preferably contains a glycidyl amine-type epoxy resin, a bisphenol A-type diglycidyl ether, and a bisphenol F-type diglycidyl ether, from the viewpoint of improving the water resistance.

Specific examples of the epoxy compound included in the glycidyl amine-type epoxy resin include 4-glycidyloxy-N,N-diglycidylaniline, diaminodiphenylmethane tetraglycidyl ether, 1,3-bis(N,N-diglycidylaminomethyl)cyclohexane, N,N,N',N'-tetraglycidyl-m-xylenediamine, and N,N,N',N'-tetraglycidyl diaminophenylmethane, and the like, but the epoxy compound is not limited to these. One of these may be used alone, or two or more of these may be used in mixture.

Commercial products of the glycidyl amine-type epoxy resin include, for example, jER630, jER604 (produced by Mitsubishi Chemical Corporation), TETRAD-C, TETRAD-X (produced by Mitsubishi Gas Chemical Company, Inc.), Araldite MY-720, Araldite MY0500, Araldite MY0510, Araldite MY0600 (produced by Huntsman Advanced Materials), YH-434, YH-434L (produced by Nippon Steel & Sumikin Chemical Co., Ltd.), EP-3950S, EP-3950L, EP-3980S (produced by ADEKA CORPORATION), and the like, but the glycidyl amine-type epoxy resin is not limited to these. One of these may be used alone, or two or more of these may be used in mixture.

Commercial products of the bisphenol-type epoxy resin include, for example, jER825, 827, 828, 828EL, 828US, 828XA, 834, 1009, 1010, 1003F, 1004F, 1005F, 1009F, 1004FS, 1006FS, 1007FS, 806, 806H, 807 (produced by Mitsubishi Chemical Corporation), EPICLON840, 840-S, 850, 850-S, EXA-850CRP, 850-LC, 830, 830-S, 835, EXA-830CRP, EXA830LVP, EXA-835LV, 860, 1050, 1055, 2050, 3050, 4050, 7050, HM-091, HM-101 (produced by DIC Corporation), ADEKA RESIN EP-4100, EP-4100G, EP-4100E, EP-4100TX, EP-4300E, EP-4400, EP-4520S, EP-4530, EP-4901, EP-4901E (produced by ADEKA CORPORATION), and DER-331, 332, 383, 330, 354, 351 (produced by Dow Chemical Corporation). One of these may be used alone, or two or more of these may be used in mixture.

In the case where the component (A) contains a glycidyl amine-type epoxy resin and a bisphenol-type epoxy resin, the mass ratio between the glycidyl amine-type epoxy resin and the bisphenol-type epoxy resin is such that the mass of the glycidyl amine-type epoxy resin:the mass of the bisphenol-type epoxy resin is preferably 4:6 to 9:1, more preferably 4:6 to 8:2, and most preferably 5:5 to 7:3, from the viewpoint of improving the ink resistance, the adhesive strength, and the water resistance.

The component (B) used in the present invention is talc. By adding the component (B) in the component (A), both ink resistance and adhesive strength can be achieved. Talc is an ore also called talcum, and is a material called pagodite in general. Talc is preferably used as a talc powder in the form of powder. A talc powder may be a powder (mainly, an inorganic powder) obtained by pulverizing the talcum. Talc chemically corresponds to hydrated magnesium silicate [Mg₃Si₄O₁₀(OH)₂], and mainly contains about 60% of SiO₂, about 30% of MgO, and about 4.8% of crystallization water. A pulverized talc powder of natural talc is preferable from the viewpoint of improving the dispersibility into the component (A) and the adhesive strength. The 50% average particle size of the component (B) is preferably 0.1 µm to 50 µm, more preferably 0.2 µm to 30 µm, and most preferably 0.5 to 20 µm, from the viewpoint of improving the adhesive strength. Here, in the present Specification including Examples and Comparative Examples, the average particle size means a particle size in a cumulative volume ratio of 50% in a particle size distribution obtained by a laser diffraction scattering method (D50) unless otherwise noted.

The content of the component (B) is preferably 10 to 300 parts by mass, preferably 20 to 200 parts by mass, and most preferably 40 to 170 parts by mass, relative to 100 parts by mass of the (A). If the content of the (B) is 10 parts by mass or more, the ink resistance can be improved, and if the content of the (B) is 300 parts by mass or less, there is no possibility that the adhesive strength is lowered.

The component (C) used in the present invention is a curing agent that is a liquid at 25°C. Adding the component (C) makes it possible to achieve low-temperature curability and high adhesive strength without lowering the ink resistance. However, the component (C) of the present invention does not include a curing agent obtained by dispersing and liquefying a curing agent that is a solid at 25°C in an epoxy resin. The component (C) preferably contains an imidazole curing agent and/or an amine curing agent from the viewpoint of achieving the low-temperature curability and improving the adhesive strength. Note that the amine curing agent mentioned in the present invention is an amine curing agent except for an imidazole curing agent. The component (C) more preferably contains both of an imidazole curing agent and an amine curing agent from the viewpoint achieving the low-temperature curability and improving the adhesive strength. Specific examples of the imidazole curing agent used as the component (C) include 1,2-dimethylimidazole, 2-ethyl-4-methylimidazole, 1-benzyl-2-methylimidazole, 1-benzyl-2-phenylimidazole, 1-cyanoethyl-2-methylimidazole, and the like. The component (C) preferably contains an amine curing agent having a primary amine in a molecule, and more preferably contains a polyether amine, as the amine curing agent, from the viewpoint of improving the ink resistance. The polyether amine mentioned in the present invention is an amine compound having a repeating structural unit of -(CR₂-O)- in a molecule, where R each independently represents hydrogen and/or a hydrocarbon group. Specific examples of the primary polyether amine includes methoxy poly(oxyethylene)-2-propylamine, methoxy poly(oxypropylene)-2-propylamine, polyoxypropylene diamine, triethylene glycol diamine, trimethylolpropane poly(oxypropylene)triamine, glyceryl poly(oxypropylene)triamine, and the like. The component (C) preferably contains an amine curing agent having a tertiary amine in a molecule from the viewpoint of further improving the low-temperature curability, and preferably contains both an amine curing agent having a primary amine and an amine curing agent having a tertiary amine from the viewpoint of improving the ink resistance and the low-temperature curability. Specific examples of the amine curing agent having a tertiary amine include diazabicycloundecene, diazabicyclononene, tris(dimethylaminomethyl)phenol, and the like. One of these may be used alone, or two or more of these may be used in mixture.

The content of the component (C) is preferably 1 to 50 parts by mass, more preferably 5 to 40 parts by mass, and most preferably 10 to 30 parts by mass, relative to 100 parts by mass of the (A). If the content of the component (C) is 1 parts by mass or more, the low-temperature curability can be achieved, and if the content of the component (C) is 50 parts by mass or less, there is no possibility that the ink resistance or the adhesive strength is lowered. In the case where the component (C) contains both an imidazole curing agent and an amine curing agent, the mass ratio (the total mass of the imidazole curing agent:the total mass of the amine curing agent) is preferably 2:8 to 8:2, more preferably 3:7 to 7:3, and most preferably 3:7 to 5:5. If the mass ratio is 2:8 to 8:2, the low-temperature curability can be achieved, and there is no possibility that the ink resistance or the adhesive strength is lowered. In the case where the amine curing agent contains a primary amine compound and a tertiary amine compound, the mass ratio (the total mass of the primary amine compound:the total mass of the tertiary amine compound) is preferably 9:1 to 1:9, more preferably 8:2 to 2:8, and most preferably 8:2 to 5:5. If the mass ratio is 9:1 to 1:9, the low-temperature curability can be achieved, and there is no possibility that the storage stability is lowered.

The present invention preferably comprises a dispersant as a component (D). The component (D) of the present invention is an aid for uniformly dispersing the component (B) in the component (A). Adding the component (D) makes it possible to inhibit the sedimentation or separation of the component (B) in the component (A) with time and improve the storage stability as an adhesive suitable for bonding of a part or a member used in an inkjet head. The component (D) is not particularly limited as long as the component (D) can disperse the component (B) in the component (A), but preferably is a dispersant composed of a carboxylic ester or a phosphoric acid ester from the viewpoint of improving the dispersibility of the component (B) and preventing the ink resistance or the adhesive strength from being lowered.

The content of the (D) is preferably 0.01 to 10 parts by mass, more preferably 0.1 to 7 parts by mass, and most preferably 0.5 to 5 parts by mass, relative to 100 parts by mass of the (A). If the content of the (D) is 0.01 parts by mass or more, the (B) can be uniformly dispersed in the (A), and if the content of the (D) is 10 parts by mass or less, there is no possibility that the ink resistance or the adhesive strength is lowered.

The present invention preferably further comprises a silane coupling agent as a component (E). Adding the component (E) makes it possible to improve the adhesive strength and the water resistance. The silane coupling agent includes, for example, glycidyl group-containing silane coupling agents such as 3-acryloxypropyltrimethoxysilane, 3-glycidoxypropylmethyldimethoxysilane, 3-glycidoxypropylmethyldiethoxysilane, 3-glycidoxypropylmethyldipropyloxysilane, 3-glycidoxypropyldimethylmonomethoxysilane, 3-glycidoxypropyldimethylmonoethoxysilane, 3-glycidoxypropyldimethylmonopropyloxysilane, 2-(3,4-epoxycyclohexyl)ethyltrimethoxysilane, 3-glycidoxypropyltriethoxysilane, 3-glycidoxypropyltrimethoxysilane, and 3-glycidoxypropyl methyldiethoxysilane; vinyl group-containing silane coupling agents such as vinyltris(β-methoxyetoxy)silane, vinyltriethoxysilane, and vinyltrimethoxysilane; (meth)acrylic group-containing silane coupling agents such as 3-methacryloxypropylmethyldimethoxysilane, 3-methacryloxypropylmethyldiethoxysilane, 3-methacryloxypropyldimethylmonomethoxysilane, 3-methacryloxypropyldimethylmonoethoxysilane, 3-acryloxypropylmethyldipropyloxysilane, 3-acryloxypropylmethyldimethoxysilane, 3-acryloxypropylmethyldiethoxysilane, 3-acryloxypropylmethyldipropyloxysilane, 3-acryloxypropyldimethylmonopropyloxysilane, 3-acryloxypropyldimethylmonomethoxysilane, 3-acryloxypropyldimethylmonoethoxysilane, 3-acryloxypropyldimethylmonopropyloxysilane, γ-methacryloxypropyltrimethoxysilane; amino group-containing silane coupling agents such as 3-aminopropyltrimethoxysilane, 3-aminopropyltriethoxysilane, N-phenyl-3-aminopropyltrimethoxysilane, N-2-(aminoethyl)-3-aminopropylmethyldimethoxysilane, and N-2-(aminoethyl)-3-aminopropylmethyldiethoxysilane; γ-mercaptopropyltrimethoxysilane; γ-chloropropyltrimethoxysilane, and the like. Among these, amino group-containing silane coupling agents are preferable, 3-aminopropyltrimethoxysilane, 3-aminopropyltriethoxysilane, N-2-(aminoethyl)-3-aminopropylmethyldimethoxysilane, and N-2-(aminoethyl)-3-aminopropylmethyldiethoxysilane are more preferable, and 3-aminopropyltrimethoxysilane is most preferable, from the viewpoint that these are excellent in adhesive strength. The amino group silane coupling agent of the present invention is not included in the component (C). One of these may be used alone, or two or more of these may be used in combination.

The content of the (E) is preferably 0.1 to 20 parts by mass, more preferably 0.3 to 10 parts by mass, and most preferably 0.5 to 5 parts by mass, relative to 100 parts by mass of the (A). If the content of the (E) is 0.1 parts by mass or more, the water resistance can be improved, and if the content of the (E) is 20 parts by mass or less, there is no possibility that the storability is lowered.

The present invention can further comprise fumed silica as a component (F). The fumed silica normally consists of silicon dioxide obtained by the flame hydrolysis method, and can generally form spherical particles in which a plurality of particles are agglomerated in the form of beads and fused to form a bulky agglomerate. Adding the component (F) makes it possible to adjust the applicability as an adhesive suitable for bonding a part or a member used in an inkjet head, and improve the workability. The component (F) is preferably surface-treated fumed silica, and more preferably fumed silica having a hydrophobic surface, from the viewpoint of preventing the ink resistance from being lowered. Specific examples of fumed silica having a hydrophobic surface include fumed silica surface-treated with dimethylsilyl, octyl-silane, trimethylsilyl, and dimethyl silicone oil. As the component (F), fumed silica surface-treated with octyl-silane is preferably used because it improves the applicability and does not lower the adhesive strength. One of these may be used alone, or two or more of these may be used in combination.

The content of the (F) preferably includes 20 parts by mass as an upper limit, is more preferably 10 parts by mass or less, and most preferably 7 parts by mass or less, relative to 100 parts by mass of the (A). If the content of the (F) is 20 parts by mass or less, there is no possibility that the adhesive strength is lowered.

Moreover, the present invention may contain an appropriate amount of an additive such as an organic filler, a colorant, a rheology controlling agent, or a storage stabilizer within a range that does not impair the properties of the present invention, but preferably does not contain an alcohol-based solvent because an alcohol-based solvent in combination with the component (C) lowers the storage stability. The alcohol-based solvent includes benzyl alcohol and the like.

The organic filler only has to be an organic substance composed of a rubber, an elastomer, a plastic, a polymer (or a copolymer), or the like, and is further preferably a powder of these organic substances. The organic filler also may be an organic filler having a multi-layer structure such as a core shell type. One of these may be used alone, or two or more of these may be used in combination.

The colorant includes inorganic pigments such as carbon black, barium sulfate, alumina white, clay, and titanium oxide; organic pigments such as indanthrone blue, quinacridone red, dioxazine violet, and phthalocyanine blue; fluorescent inorganic pigments such as ZnS:Ag, ZnS:Cu, ZnS:Mn, SrAl₂O₄:Eu, Sr₄Al₁₄O₂₅:Eu, Y₂O₂S:Eu, and Y₂O₃:Eu; fluorescent organic pigments; dyes, and the like, but is not limited to these.

The rheology controlling agent generally means an additive that exerts an action of controlling a rheological property, and may be those called a thixotropic agent, an anti-settling agent, a thixotrope, a thickener, or the like. The rheology controlling agent includes, for example organic rheology controlling agents, and includes, for example, fatty acid amide-based rheology controlling agents, ethyl cellulose-based rheology controlling agents, and the like, but is not limited to these.

As the storage stabilizer, borate ester, phosphoric acid, alkyl phosphoric acid ester, or p-toluenesulfonic acid can be used. The borate ester includes tributyl borate, trimethoxyboroxine, ethyl borate, and the like, but is not limited to these. As the alkyl phosphoric acid ester, trimethyl phosphate, tributyl phosphate, and the like may be used, but the alkyl phosphoric acid ester is not limited to these. One storage stabilizer may be used or a mixture of multiple storage stabilizers may be used. In consideration of storage stability, the storage stabilizer is preferably one or more selected from the group consisting of phosphoric acid, tributyl borate, trimethoxyboroxine, and methyl p-toluenesulfonate.

Since the epoxy resin composition of the present invention has low-temperature curability, the epoxy resin composition is preferably used as a two-part mixing-type kit which includes a composition containing the component (A) and the component (B) as an agent A and a composition containing the component (C) as an agent B, and which is used by mixing these compositions. That is, the epoxy resin composition of the present invention is preferably a kit separately including the agent A and the agent B without being mixed. By making two-part form with the above-described agent A and the above-described agent B being separated, the component (A) and the component (C) do not come into contact during storage, and it is thus possible to provide a kit of an epoxy resin composition having improved storage stability. When the epoxy resin composition contains the components (D) to (F), the (D) may be contained in the agent A, the (E) may be contained in the agent B, and the (F) may be contained in the agent A and/or the agent B. The mixing ratio between the agent A and the agent B is preferably such that the agent B is prepared to contain 1 to 50 parts by mass of the (C), more preferably such that the agent B is prepared to contain 5 to 40 parts by mass of the (C), and most preferably such that the agent B is prepared to contain 10 to 30 parts by mass of the (C), relative to 100 parts by mass of the (A) of the agent A. Note that in the case where the present invention is such a kit of an epoxy resin composition, the description of "epoxy resin composition" in the present Specification can be read as "kit" or "kit of an epoxy resin composition" as appropriate.

### <Method for mixing the agent A and the agent B>

The method for mixing the agent A and the agent B of the kit of an epoxy resin composition of the present invention is not particularly limited as long as the agent A and the agent B can be uniformly mixed. For example, an agitator such as a mixer or a planetary mixer may be used, or the agent A and the agent B may be manually stirred using a glass rod or the like. Since the kit of an epoxy resin composition of the present invention is excellent in low-temperature curability, and the agent A and the agent B promptly react with each other by mixing, the agent A and the agent B are preferably mixed at 40°C or less.

### <Applying method>

As the method for applying the epoxy resin composition or the kit of the present invention to an adherend, a publicly-known method for applying a sealant, an adhesive, or a coating agent is used. For example, a method such as dispensing using an automatic applicator, spray, inkjet, screen printing, gravure printing, dipping, or spin-coating can be used.

### <Viscosity of the adhesive composition>

Since the epoxy resin composition of the present invention can be favorably used for an inkjet head, the viscosity of the epoxy resin composition or the viscosity after mixing of the agent A and the agent B is preferably 0.1 to 100 Pa·s, more preferably 0.5 to 70 Pa·s, and most preferably 1 to 50 Pa·s, in consideration of the applicability. Note that the viscosity in the present Specification is a value measured at 25°C and a shear rate of 20 s⁻¹ by using a cone and plate viscometer unless otherwise noted.

### <Curing method and cured product>

The epoxy resin composition of the present invention can be cured under any conditions. The curing method includes photo-curing and heat curing, and heat curing is preferable. The curing temperature is, for example, preferably 25°C to 100°C, more preferably 30°C to 90°C, and most preferably 40°C to 80°C. The curing time is not particularly limited, but is, for example, preferably 30 minutes to 10 hours, and further preferably 1 hour or more and 7 hours or less, when the temperature is 25°C to 100°C.

### <Usage>

The epoxy resin composition of the present invention can be cured at a low temperature, and has a high adhesive strength and excellent resistance to an ink used in an inkjet printer, and is thus favorable in bonding of an inkjet head. Here, excellent resistance to an ink is also called ink resistance, and specifically means to include solvent resistance, chemical resistance, organic solvent resistance, water resistance. More specifically, the cured product of the epoxy resin composition of the present invention can be stably present without being dissolved, broken, cracked, deformed, swollen, or the like even when the cured product comes into contact with a solvent, a chemical, an organic solvent, water, or the like contained in an ink.

In particular, in an inkjet printer using a solvent-based ink, since, for example, alcohols such as N-methylpyrrolidone, methanol, ethanol, isopropanol, butanol, and glycol, ethers such as tetrahydrofuran are used as solvents, the epoxy resin composition of the present invention has high resistance to the solvents (ink resistance). The epoxy resin composition of the present invention having such high ink resistance is useful in bonding a part or a member of an inkjet head. Here, the inkjet head refers to a part which ejects an ink to a printing subject such as paper in an inkjet printer. The inkjet head includes a thermal head, a piezo head, and the like, but the present invention is normally useful in a piezo inkjet head. The epoxy resin composition of the present invention can be used for bonding parts or members of an inkjet head such as a nozzle part, a reservoir part, and a pressure chamber part of the inkjet head. Parts or members of an inkjet head may be formed of a plastic material, an organic polymer material, an inorganic polymer material, a metal material, or the like used in inkjet printers in general. More specifically, these parts or members include, for example, metals such as stainless steel.

Moreover, the epoxy resin composition of the present invention can also be used in various usages other than the above-described inkjet head. Specific examples for use include bonding, sealing, cast molding, coating, and the like of switch parts, head lamps, components in engines, electric components, drive engines, brake oil tanks, body panels such as front hoods, fenders, and doors, windows, and the like for automobiles in the field of automobiles; bonding, sealing, cast molding, coating, and the like of flat panel displays (liquid crystal displays, organic EL displays, light-emitting diode display devices, and field-emission displays), video discs, CD, DVD, MD, pick-up lenses, hard disks, and the like in the field of electronic materials; bonding, sealing, coating, and the like of lithium batteries, lithium-ion batteries, manganese batteries, alkaline batteries, fuel cells, silicon solar cells, dye-sensitized cells, organic solar cells, and the like in the field of batteries; bonding, sealing, and the like of the peripheries of optical switches, optical fiber materials in the peripheries of optical connectors, optical passive components, optical circuit components, and the peripheries of opto-electronic integrated circuits in the field of optical components; bonding, sealing, and the like of camera modules, lens materials, finder prisms, target prisms, finder covers, light-reception sensor units, imaging lenses, projection lenses of projection televisions, and the like in the field of optical devices; and bonding of gas pipes, water pipes, and the like, lining materials, sealants, and the like in the field of infrastructures.

### Examples

Next, the present invention will be described in further detail by presenting Examples; however, the present invention is not limited to only these Examples.

### [Examples 1 to 5, Comparative Examples 1 to 7]

Components described below were prepared for preparing epoxy resin compositions.

(A-1) Glycidyl amine-type epoxy resin (N,N-diglycidyl-4-glycidyloxyaniline), product name: jER630 (Mitsubishi Chemical Corporation)
(A-2) Bisphenol-A-type/F-type mixed epoxy resin, product name: EPICLON EXA-835LV (produced by DIC Corporation)
(A-3) Phenol novolac epoxy resin, product name: jER152 (Mitsubishi Chemical Corporation)
(B-1) Pulverized talc powder, product name: Talc CS (produced by Sobueclay Co., Ltd.), average particle size: 8 µm
(B-2) Pulverized talc powder, product name: SG2000 (produced by Nippon Talc Co., Ltd.), average particle size: 0.85 µm
(B'-1) Silica, product name: SO-C5 (produced by Admatechs Co., Ltd.), average particle size: 1.5 µm
(B'-2) Heavy calcium carbonate, product name: ACE-25 (produced by Calfine Co., Ltd.), average particle size: 1.1 µm
(C-1) Tris(dimethylaminomethyl)phenol (a liquid at 25°C), product name: Ancamine K54 (produced by Air Products and Chemicals, Inc.)
(C-2) 1-Benzyl-2-methylimidazole (a liquid at 25°C), product name: CUREZOL 1B2MZ (produced by SHIKOKU CHEMICALS CORPORATION)
(C-3) Trimethylolpropane poly(oxypropylene)triamine (a liquid at 25°C), product name: JEFFAMINE T-403 (produced by Huntsman Corporation)
(C'-1) Curing agent obtained by dispersing a microcapsule-type amine-based curing agent (a solid at 25°C) in 33% by mass in an epoxy resin, product name: NOVACURE HXA-3932 (produced by Asahi Kasei Corporation)
(D-1) Hydroxyl group-containing carboxylic ester dispersant, product name: DISPERBYK-108 (produced by BYK Japan)
(D-2) Phosphate group-containing phosphoric acid ester-based dispersant, product name: DISPERBYK-111 (produced by BYK Japan)
(E) Silane coupling agent, 3-aminopropyltrimethoxysilane, product name: KBM-903 (produced by Shin-Etsu Chemical Co., Ltd.)
(F) Fumed silica surface-treated with octyl-silane, product name: AEROSIL R805 (produced by NIPPON AEROSIL CO., LTD.)

### (Other) Benzyl alcohol (Tokyo Chemical Industry Co., Ltd.)

The above-described (A), (B), and (D) were weighed into a stirring container, followed by stirring with a mixer for 30 minutes to obtain an agent A. The (C) and (E) were weight into another stirring container, followed by stirring with a mixer for 30 minutes to obtain an agent B. In the case where the (F) was used, the (F) was further thrown into the agent A after the (A), the (B), and the (D) were mixed in the agent A, followed by stirring with a mixer for 1 hour (detailed preparation amounts were according to Table 1 and Table 2. Numerical values in Table 1 and Table 2 are all described in parts by mass. All the tests were conducted at 25°C unless otherwise stated.).

Hereinafter, methods for testing low-temperature curability, adhesive strength, ink resistance, and the like will be described. In each test, epoxy resin compositions of Examples and Comparative Examples prepared by stirring the above-mentioned agents A and agents B with a mixer for 10 minutes were used.

### [Low-temperature curability]

The epoxy resin compositions of Examples and Comparative Examples were each applied to a glass-made test piece having a width of 25 mm×a length of 100 mm×a thickness of 10 mm. Each epoxy resin composition was cured under a 50°C atmosphere for 6 hours by using a hot-air drying furnace to obtain a test specimen. The surface of each cured product was poked with a tip of a glass rod and the cured state was visually checked.
Passed: The resin did not adhere to the tip of the glass rod.
Failed : The resin adhered to the tip of the glass rod.

### [Adhesive strength]

The epoxy resin compositions of Examples and Comparative Examples were each applied to a SUS304-made test piece having a width of 25 mm×a length of 100 mm×a thickness of 1.6 mm. The test piece to which each epoxy resin composition was applied and a test piece that was the same as the former except that the epoxy resin composition was not applied were attached and fixed with a clip such that the overlapped surface became 25 mm×10 mm, followed by curing under a 50°C atmosphere for 6 hours by using a hot-air drying furnace to obtain a test specimen. The shear adhesive strength (the unit was MPa) was measured in accordance with JIS K 6850:1999 by using a universal tensile testing machine (with a tensile speed of 10 mm/min) at 25°C, and was evaluated in accordance with evaluation criteria described below.
Passed: 10 MPa or more
Failed: Less than 10 MPa
The upper limit value is not particularly limited, but is 30 MPa or less.

### [Ink resistance]

### (i) Solvent resistance

The epoxy resin compositions of Examples and Comparative Examples were each poured into a mold which was made of polytetrafluoroethylene and had a width of 15 mm×a length of 15 mm×a thickness of 1 mm. Each epoxy resin composition was cured under a 50°C atmosphere for 6 hours by using a hot-air drying furnace to obtain a test specimen. The mass of each test specimen before immersion at this time was measured. In a 100-mL vial bottle, 70 mL of N-methylpyrrolidone as a solvent was put, and each test specimen obtained as described above was immersed under a 60°C atmosphere for 168 hours. After the immersion liquid on the surface of each test specimen was wiped with a waste cloth, the test specimen was dried at 80°C for 1 hour by using a hot-air drying furnace, and the mass of the test specimen after the immersion was measured. The ink resistance was evaluated by using a mass change rate between before the immersion and after the immersion. Ink resistance (the mass change rate %) = (the mass after the immersion-the mass before the immersion)/(the mass before the immersion) × 100 (%)
Passed: Less than 5% and no crack was formed in the cured product after the immersion.
Failed: 5% or more, or a crack was formed in the cured product after the immersion.

**Table 1**

| | | | | Ex. 1 | Ex. 2 | Ex. 3 | Ex. 4 | Ex. 5 |
|---|---|---|---|---|---|---|---|---|
| | A-1 | jER630 | | 100 | 100 | 100 | 100 | 50 |
| | A-2 | EPICLON EXA-835LV | | | | | | 50 |
| | A-3 | jER152 | | | | | | |
| | B-1 | Talc CS | | 54 | 108 | 162 | | 120 |
| Agent A | B-2 | SG2000 | | | | | 54 | |
| | B'-1 | SO-C5 | | | | | | |
| | B'-2 | ACE25 | | | | | | |
| | D-1 | BYK-108 | | | | | | 1 |
| | D-2 | BYK-111 | | 1 | 1 | 1 | 1 | |
| | F | R805 | | 6 | 6 | 6 | 6 | |
| Agent B | C-1 | K54 | | 2.5 | 2.5 | 2.5 | 2.5 | 2.5 |
| | C-2 | 1B2MZ | | 7.5 | 7.5 | 7.5 | 7.5 | 7.5 |
| | C-3 | JEFFAMINE T-403 | | 10 | 10 | 10 | 10 | 10 |
| | C' | NOVACURE HXA-3932 | | | | | | |
| | | Benzyl alcohol | | | | | | |
| | E | KBM-903 | | 2 | 2 | 2 | 2 | 2 |
| Low-temperature curability | | | - | Passed | Passed | Passed | Passed | Passed |
| Adhesive strength | | | MPa | 16.0 | 13.0 | 10.0 | 13.0 | 15.0 |
| Ink resistance | | | % | 1.1 | 0.7 | 1.1 | 0.7 | 3.5 |

**Table 2**

| | | | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|
| Agent A | A-1 | jER630 | | | | 35 | 70 | 100 | 100 | 35 |
| | A-2 | EPICLON EXA-835LV | | | 100 | 50 | | | | 33.5 |
| | A-3 | jER152 | | 100 | | 15 | 30 | | | 15 |
| | B-1 | Talc CS | | 54 | 54 | | | | | |
| | B-2 | SG2000 | | | | | | | | |
| | B'-1 | SO-C5 | | | | 54 | 60 | 54 | | 54 |
| | B'-2 | ACE25 | | | | | | | 54 | |
| | D-1 | BYK-108 | | | | | | | | |
| | D-2 | BYK-111 | | 1 | 1 | 1 | 1 | 1 | 1 | 1 |
| | F | R805 | | 6 | 6 | 6 | 6 | 6 | 6 | 6 |
| Agent B | C-1 | K54 | | 2.5 | 2.5 | 2.5 | 2.5 | 2.5 | 2.5 | |
| | C-2 | 1B2MZ | | 7.5 | 7.5 | 7.5 | 7.5 | 7.5 | 7.5 | |
| | C-3 | JEFFAMINE T-403 | | 10 | 10 | 10 | 10 | 10 | 10 | |
| | C' | NOVACURE HXA-3932 | | | | | | | | 50 |
| | | Benzyl alcohol | | | | | | | | 3 |
| | E | KBM-903 | | 2 | 2 | 2 | 2 | 2 | 2 | 2 |
| Low-temperature curability | | | - | Passed | Passed | Passed | Passed | Passed | Passed | Failed |
| Adhesive strength | | | MPa | 11.0 | 13.0 | 6.7 | 7.1 | 4.0 | 9.4 | - |
| Ink resistance | | | % | Crack | Crack | 6.7 | 4.0 | 1.1 | 1.1 | - |

It can be seen that Examples 1 to 5 were excellent in adhesive strength and ink resistance while having low-temperature curability. On the other hand, in Comparative Examples 1 and 2 which did not contain a glycidyl amine-type epoxy resin, a crack was formed in the cured product after the immersion in the test for ink resistance, and could not be subjected to the measurement. Moreover, Comparative Example 3 which did not contain 40% by mass or more of a glycidyl amine-type epoxy resin relative to 100% by mass of the component (A) had poor results in both adhesive strength and ink resistance. In addition, Comparative Examples 3 to 6 which used other inorganic fillers instead of the (B) had low adhesive strength and unsatisfactory as an adhesive. Note that Comparative Example 7 in which the curing agent was changed was not confirmed to be cured under the curing condition of 50°C and 6 hours, and was not evaluated in the subsequent tests. From the above, by combining the (A) to the (C), it is possible to obtain a cured product excellent in adhesive strength and ink resistance and achieve the object of the invention of the present application.

Moreover, a test for water resistance was conducted using the epoxy resin compositions of Example 1 and Example 5 in order to check the resistance to a water-based ink as adhesive compositions to be used in an inkjet head.

### (ii) Water resistance

The epoxy resin compositions of Examples and Comparative Examples were poured into a mold which was made of polytetrafluoroethylene and had a width of 15 mm×a length of 15 mm×a thickness of 1 mm. Each epoxy resin composition was cured under a 50°C atmosphere for 6 hours by using a hot-air drying furnace to obtain a test specimen. The mass of each test specimen before immersion at this time was measured. In a 100-mL vial bottle, 70 mL of pure water was put, and each test specimen obtained as described above was immersed under at 60°C for 168 hours. After water on the surface of each test specimen was wiped with a waste cloth, the test specimen was dried at 80°C for 1 hour by using a hot-air drying furnace, and the mass of the test specimen after the immersion was measured. The water resistance was evaluated by using a mass change rate between before the immersion and after the immersion. Water resistance (the mass change rate %) = (the mass after the immersion - the mass before the immersion)/(the mass before the immersion) × 100 (%)

The value of the water resistance of Example 1 was +7.9%, and the value of the water resistance of Example 5 was +3.9%. From this, containing both a glycidyl amine-type epoxy resin and a bisphenol-type epoxy resin in the (A) makes it possible to provide an effect of improving the water resistance while having ink resistance, and obtain an epoxy resin composition which can be used for not only a solvent-based ink but also a water-based ink as an adhesive suitable for bonding a part or a member used in an inkjet head.

### [Viscosity]

To check an applicability as an epoxy resin composition for bonding of an inkjet head, the mixing viscosity after the agent A and the agent B were mixed was measured by using the epoxy resin compositions of Example 1 and Example 6. The viscosity was measured at 25°C and a shear rate of 20 s⁻¹ by using a cone and plate viscometer. Example 1 was 5 Pa·s and Example 6 was 40 Pa·s, and both had viscosities suitable as an epoxy resin composition which can be used for inkjet head parts.

### Industrial Applicability

The epoxy resin composition of the present invention is capable of being cured at a low temperature and has excellent adhesive strength, and the cured product has excellent resistance to an ink used in inkjet printing, and the epoxy resin composition of the present invention is thus very useful for bonding of an inkjet head of an inkjet printer.

## Claims

1. An epoxy resin composition comprising the following components (A) to (C), and comprising 40% by mass or more of a glycidyl amine-type epoxy resin (A-1) relative to 100% by mass of the component (A):
(A) an epoxy resin,
(B) talc, and
(C) a curing agent that is a liquid at 25°C.

2. The epoxy resin composition according to claim 1, wherein the component (C) is an imidazole curing agent and/or an amine curing agent.

3. The epoxy resin composition according to claim 1 or 2, wherein a content of the component (B) is 20 to 200 parts by mass relative to 100 parts by mass of the component (A).

4. The epoxy resin composition according to any one of claims 1 to 3, further comprising a dispersant as a component (D).

5. The epoxy resin composition according to any one of claims 1 to 4, further comprising a silane coupling agent as a component (E).

6. The epoxy resin composition according to claim 5, wherein the component (E) is an amino group-containing silane coupling agent.

7. The epoxy resin composition according to any one of claims 1 to 6, wherein a content of the component (C) is 1 to 50 parts by mass relative to 100 parts by mass of the (A).

8. An adhesive comprising the epoxy resin composition according to any one of claims 1 to 7.

9. The adhesive according to claim 8, that is for bonding a part and/or a member of an inkjet head.

10. A kit comprising an agent A containing the following component (A) and component (B), and an agent B containing the following component (C):
(A) an epoxy resin, provided that the component (A) contains 40% by mass or more of a glycidyl amine-type epoxy resin (A-1) relative to 100% by mass of the component (A),
(B) talc, and
(C) a curing agent that is a liquid at 25°C.

11. The kit according to claim 10, wherein the agent A further contains a dispersant as a component (D).

12. The kit according to claim 10 or 11, wherein the agent B further contains a silane coupling agent as a component (E).

13. A two-part mixing-type adhesive comprising the kit according to any one of claims 10 to 12.

14. The adhesive according to claim 13, that is for bonding a part and/or a member of an inkjet head.

15. A cured product obtained by curing the epoxy resin composition according to any one of claims 1 to 7 or the kit according to any one of claims 10 to 12.

16. An inkjet head comprising a bonded portion bonded by the adhesive according to any one of claims 8, 9, 13, and 14.
